# EUROPÄISCHE PATENTSCHRIFT

(11) **EP 0 987 167 B1**
(45) Veröffentlichungstag und Bekanntmachung des Hinweises auf die Patenterteilung: **03.11.2004**
(21) Anmeldenummer: 99115081.4
(22) Anmeldetag: 05.08.1999
(51) Int. Cl.: B62D 25/04

(54) **Fahrzeug-Karosseriesäule, insbesondere A-Säule**
Pillar for a vehicle body structure , especially the A-pillar
Montant de porte, spécialement montant "A" de véhicule

(30) Priorität: 17.09.1998 DE 19842651
(43) Veröffentlichungstag der Anmeldung: 22.03.2000
(73) Patentinhaber: Volkswagen Aktiengesellschaft, 38436 Wolfsburg (DE)
(72) Erfinder: Dauss, Burkhard, 38442 Wolfsburg (DE)

(56) Entgegenhaltungen:
- DE-A- 19 539 457
- US-A- 5 791 716
- PATENT ABSTRACTS OF JAPAN vol. 008, no. 047 (M-280), 2. März 1984 (1984-03-02) & JP 58 202168 A (NISSAN JIDOSHA KK), 25. November 1983 (1983-11-25)

## Beschreibung

Die Erfindung betrifft eine Karosseriesäule gemäß dem Oberbegriff des Patentanspruches 1.

Eine derartige Karosseriesäule ist z.B. aus der Patentschrift US-A-5 791 716 bekannt.

Betrachtet man den bevorzugten Einsatzfall der Erfindung, nämlich bei einer A- Säule eines Kraftfahrzeugs, so enthält diese als wesentliche Bestandteile einen weitgehend senkrecht verlaufenden steifen Träger, der vor allem im Hinblick auf die Unfallsicherheit der Fahrzeuginsassen steif konzipiert ist, eine dem Fahrzeuginnenraum zugekehrte Verkleidung sowie zumindest eine Flüssigkeits- oder Stromleitung, beispielsweise einen Wasserablauf von einer Schiebedachanordnung des Fahrzeugs. Die Verlegung dieser Leitungen muß dabei so erfolgen, daß im Fahrbetrieb Klappergeräusche nicht auftreten können. Außerdem muß die Gestaltung der Karosseriesäule so erfolgen, daß die Verlegung der Leitungen im Fahrzeug keine wesentlichen Schwierigkeiten bietet.

Man könnte daran denken, die Leitungen in dem vom Träger umschlossenen Hohlraum unterzubringen. Dies macht jedoch einerseits Schwierigkeiten hinsichtlich einer klapperfreien Festlegung; außerdem ist der Konstrukteur dann nicht mehr frei in der Auslegung des Trägers allein im Hinblick auf Sicherheitsaspekte. So genügt es häufig nicht, den Träger als Hohlträger allein aus einem relativ flachen Profil und einem Bereich des Karosserieaußenblechs zusammenzusetzen, vielmehr müssen in dem so gewonnenen Hohlraum Versteifungsbleche untergebracht werden, um den modernen Sicherheitsansprüchen genüge zu tun.

Der Erfindung liegt die Aufgabe zugrunde, eine gattungsgemäße Karosseriesäule so auszubilden, daß unter Wahrung des Gesichtspunkts der Montagefreundlichkeit die Unabhängigkeit der Konstruktion des steifen Trägers der Säule von den Notwendigkeiten der Unterbringung der zumindest einen Leitung gewährleistet ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung bietet also zum einen den Vorteil der klapperfreien Unterbringung der zumindest einen Leitung, ohne daß die Leitung in umständlicher Weise in den Träger eingefädelt und dort festgelegt werden muß und ohne daß die Konstruktion des Träger im Hinblick auf die Unterbringung der Leitung ausgelegt sein muß. Zum anderen bietet die Erfindung die vorteilhafte Möglichkeit, die zumindest eine Leitung zusammen mit dem Funktionskanal als Vormontageeinheit in Halteverbindung mit dem Träger zu bringen, so daß die Festlegung der Leitung außerhalb des Fahrzeugrohbaus und damit unter leichter Zugänglichkeit erfolgen kann. Der Funktionskanal, der übrigens in wenn auch begrenztem Maße zur Versteifung der Karosseriesäule beiträgt, erfüllt aber noch eine weitere Aufgabe, indem er zur Befestigung der Verkleidung dient. Dies kann in einfacher Weise über Klipsverbindungen geschehen, so daß die Verkleidung über den an den Träger angesetzten Funktionskanal gestülpt wird und die Klipsverbindungen durch Niederdrücken der Verkleidung hergestellt werden.

Der Funktionskanal kann aber noch eine weitere Aufgabe lösen: In modernen Kraftfahrzeugen setzt man zum Insassenschutz in zunehmendem Maße Airbags ein, und zwar nicht nur unmittelbar vor den Vordersitzen, das heißt im Lenkrad und/oder im Armaturenbrett, sondern auch im Bereich von Karosseriesäulen. Ordnet man bei der erfindungsgemäßen Ausbildung der Karosseriesäule gemäß Anspruch 10 den Airbag in einen Winkelbereich an, der begrenzt ist von dem Träger und einer Außenfläche des Funktionskanals, so kann der Funktionskanal zur Abstützung des Airbags bei seiner Aktivierung herangezogen werden.

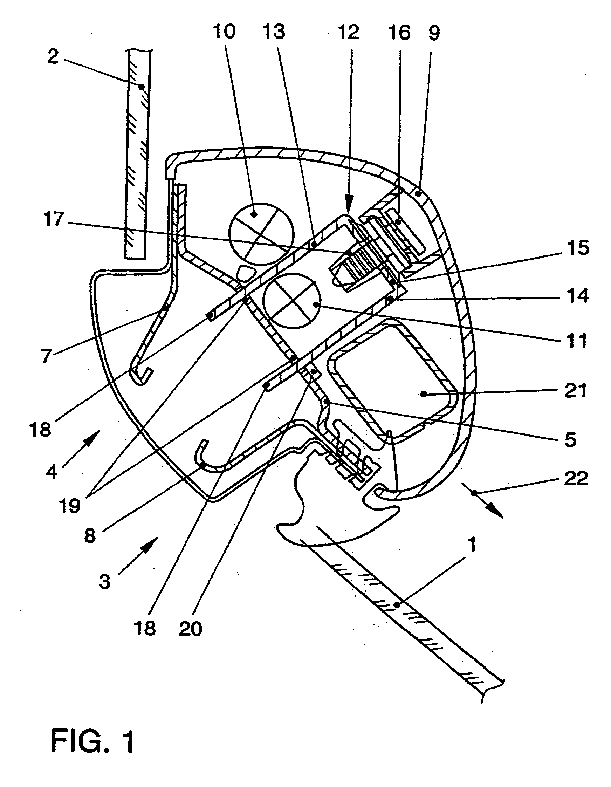

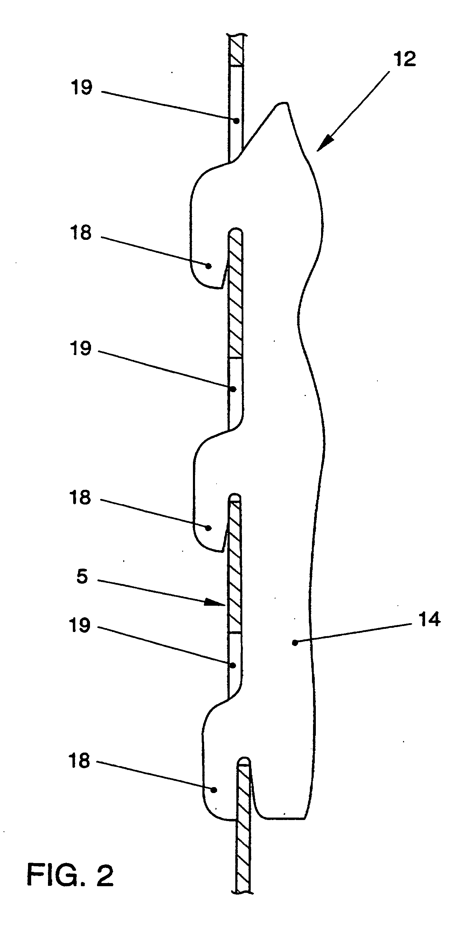

Ein Ausführungsbeispiel der Erfindung für den Fall einer A-Säule eines Kraftfahrzeugs wird im folgenden anhand der Zeichnung erläutert. Während Figur 1 einen Horizontalschnitt durch die A-Säule wiedergibt, zeigt Figur 2 eine Einzelheit der Befestigung des Funktionskanals an dem Träger der Karosseriesäule.

In Figur 1 ist die A-Säule, die sich zwischen der bei 1 angedeuteten linken Vordertür und der Windschutzscheibe 2 des Fahrzeug in an sich bekannter Weise erstreckt, allgemein mit 3 bezeichnet. Sie enthält als für die Sicherheit der Fahrzeuginsassen wesentlichen Bestandteil den steifen Träger 4, gebildet durch das Profil 5, die Außenblechpartie 6 und Versteifungsbleche 7 und 8. Damit bildet der Träger 3 nicht nur einen Hohlträger mit einem Hohlraum, sondern enthält auch in diesem Hohlraum versteifende Bestandteile 7 und 8. Alle diese Bestandteile des Trägers 4, allenfalls mit Ausnahme der Außenblechpartie 6, müssen unter dem Gesichtspunkt der Erzielung der erwünschten Steife des Träger gewählt und ausgelegt sein.

Der Träger 4 wird gegen das Fahrzeuginnere durch die Verkleidung 9 abgedeckt, und zwar unter Wahrung eines Abstands bzw. eines Hohlraums zwischen der Verkleidung 9 einerseits und dem Trägerprofil andererseits. Dieser Abstand dient zur Unterbringung von elektrischen Leitungen 10 und des Wasserablaufs 11. Gegebenenfalls können auch weitere und anderen Zwecken dienende Leitungen hier untergebracht werden. Diese Leitungen 10 und 11 müssen klapperfrei gehalten sein. Schon aus diesem Grunde macht ihre Unterbringung in dem Hohlraum des Trägers 4 Schwierigkeiten; außerdem muß dann bei der Gestaltung des Trägers 4 außer auf Sicherheitsaspekte auch auf die Unterbringung und Festlegung der Leitungen 10 und 11 Rücksicht genommen werden.

Um dies zu vermeiden sieht die Erfindung den steifen Funktionskanal 12 vor, der hier einen U-ähnlichen Querschnitt mit den beiden Schenken 13 und 14 und der Basis 15 aufweist. Dabei dient die Basis 15 zur Festlegung der Verkleidung 9 über den der Verkleidung 9 zugeordneten Klipsstift 16 und die basisseitige elastische Aufnahme 17.

Während die Leitung 11 in dem von dem Funktionskanal 12 umschlossenen Hohlraum angeordnet und klapperfrei festgelegt ist, ist in diesem Ausführungsbeispiel die Leitung 10 auf dem Schenkel 13 des Funktionskanals 12, das heißt auf einer Außenseite desselben, befestigt. Die Befestigung kann ebenfalls über Klipshalterungen oder auf sonstige Weise erfolgen. Von Vorteil ist die Tatsache, daß die Leitungen 10 und 11 vor der nun zu beschreibenden Festlegung des Funktionskanals 12 an dem Profil 5 erfolgt, so daß eine Vormontageeinheit entsteht.

Wie besonders deutlich aus Figur 2 ersichtlich, ist jeder der Schenkel 13 und 14 - dort ist nur der Schenkel 14 erkennbar - des Funktionskanals 12 an seinem freien Ende in definierten, vorteilhafterweise gleichen Abständen mit hakenförmigen Fortsätzen 18 versehen, die durch schlitzförmige Ausnehmungen 19 im Profil 5 des Trägers 4 zwecks Herstellung der Verbindung hindurchgeführt sind; anschließend wurde der Funktionskanal 12 in Richtung nach unten verschoben, so daß die hakenförmigen Fortsätze 18 die nach oben weisenden Ränder der schlitzförmigen Ausnehmungen 19 unter Ausübung eines bestimmten Querdrucks hintergreifen. Damit der Funktionsträger 12 sich im rauhen Fahrbetrieb nicht ungewollt wieder in Richtung nach oben verschiebt, ist eine Schraubarretierung 20 (siehe Figur 1) vorgesehen.

In dem Zwischenraum zwischen dem Profil 5 und der Verkleidung 9 kann ferner ein Airbag 21 an sich bekannten Aufbaus und bekannter Funktionsweise untergebracht werden, dessen Schußrichtung durch den Pfeil 22 angedeutet ist. Dieser Airbag 21 ist, wie Figur 1 deutlich erkennen läßt, in einem durch den Schenkel 14 des Funktionskanals 12 einerseits und eine Partie des Profils 5 des Trägers 4 andererseits begrenzten Winkelraum so untergebracht, daß der Schenkel 14 des Funktionskanals 12 an der Abstützung des Airbags 21 bei seiner Aktivierung teilnimmt.

Mit der Erfindung ist also eine gattungsgemäße Karosseriesäule geschaffen, die mit minimalem, leicht beherrschbaren zusätzlichen Aufwand einerseits dem Gesichtspunkt einer klapperfreien Unterbringung von Leitungen, andererseits dem Gesichtspunkt der sicherheitstechnisch optimalen Ausgestaltung der Karosseriesäule Rechnung trägt.

## Patentansprüche

1. Karosseriesäule insbesondere A-Säule eines Fahrzeugs, mit einem steifen Träger, einer dem Fahrzeuginnenraum zugekehrten Verkleidung sowie zumindest einer Flüssigkeits- oder Stromleitung, **dadurch gekennzeichnet, daß** zwischen Träger (4) und Verkleidung (9) zumindest ein die Leitung (10, 11) tragender Funktionskanal (12) angeordnet ist, der in aufhebbarer Halteverbindung (18, 19) mit dem Träger (4) steht und an dem die Verkleidung (9) befestigt ist.

2. Karosseriesäule nach Anspruch 1, **dadurch gekennzeichnet, daß** der Funktionskanal (12) mit der Leitung (10, 11) eine Vormontageeinheit bildet.

3. Karosseriesäule nach Anspruch 1 oder 2, **dadurch gekennzeichnet, daß** die Befestigung der Verkleidung (9) durch zumindest eine Klipsverbindung (16, 17) gebildet ist.

4. Karosseriesäule nach einem der Ansprüche 1 bis 3, **dadurch gekennzeichnet, daß** die Halteverbindung eine Schiebeverbindung mit Ausnehmungen (19) in dem Träger (4) oder dem Funktionskanal (12) durchsetzenden hakenförmigen Fortsätzen (18) am Funktionskanal (12) bzw. am Träger (4) ist.

5. Karosseriesäule nach Anspruch 4, **dadurch gekennzeichnet, daß** die hakenförmigen Fortsätze (18) derart ausgerichtet sind, daß die zum Herstellen der Halteverbindung erforderliche Schiebebewegung des Funktionskanals (12) relativ zum Träger (4) von oben nach unten erfolgt.

6. Karosseriesäule nach Anspruch 4 oder 5, **dadurch gekennzeichnet, daß** zur Sicherung der Halteverbindung zumindest eine Schraubverbindung (20) dient.

7. Karosseriesäule nach einem der Ansprüche 4 bis 6, **dadurch gekennzeichnet, daß** der Funktionskanal (12) einen U-ähnlichen Querschnitt mit zwei Schenkeln (13, 14) aufweist, die an ihren freien Enden mit den hakenförmigen Fortsätzen (18) versehen sind, während die Basis (15) des U-förmigen Querschnitts zur Befestigung der Verkleidung (9) eingerichtet ist.

8. Karosseriesäule nach einem der Ansprüche 1 bis 7, **dadurch gekennzeichnet, daß** zumindest eine Leitung (11) von dem Funktionskanal (12) aufgenommen ist.

9. Karosseriesäule nach einem der Ansprüche 1 bis 8, **dadurch gekennzeichnet, daß** zumindest eine Leitung (10) an einer Außenfläche des Funktionskanals (12) angeordnet ist.

10. Karosseriesäule nach einem der Ansprüche 1 bis 9, **dadurch gekennzeichnet, daß** ein Airbag (21) unter der Verkleidung (9) in einem von dem Träger (4) und einer Außenfläche des Funktionskanals (12) begrenzten Winkelbereich untergebracht ist.

11. Karosseriesäule nach Anspruch 10, **dadurch gekennzeichnet, daß** der Airbag (21) mit dem Funktionskanal (12) eine Vormontageeinheit bildet.

## Claims

1. Body pillar, in particular A-pillar of a vehicle, having a stiff support, a covering which faces the vehicle interior and at least one liquid or current line, **characterized in that** at least one functional channel (12) which carries the line (10, 11) is arranged between the support (4) and covering (9), is in lift-up retaining connection (18, 19) with the support (4) and to which the covering (9) is fastened.

2. Body pillar according to Claim 1, **characterized in that** the functional channel (12) together with the line (10, 11) forms a preassembly unit.

3. Body pillar according to Claim 1 or 2, **characterized in that** the fastening of the covering (9) is formed by at least one clip connection (16, 17).

4. Body pillar according to one of Claims 1 to 3, **characterized in that** the retaining connection is a sliding connection with hook-shaped extensions (18) on the functional channel (12) or on the support (4) passing through recesses (19) in the support (4) or the functional channel (12).

5. Body pillar according to Claim 4, **characterized in that** the hook-shaped extensions (18) are oriented in such a manner that the sliding movement of the functional channel (12) relative to the support (4), which movement is required in order to produce the retaining connection, takes place from the top downwards.

6. Body pillar according to Claim 4 or 5, **characterized in that** at least one screw connection (20) serves to secure the retaining connection.

7. Body pillar according to one of Claims 4 to 6, **characterized in that** the functional channel (12) has a cross section similar to a U with two limbs (13, 14) which are provided at their free ends with the hook-shaped extensions (18) while the base (15) of the U-shaped cross section is set up for the fastening of the covering (9).

8. Body pillar according to one of Claims 1 to 7, **characterized in that** at least one line (11) is accommodated by the functional channel (12).

9. Body pillar according to one of Claims 1 to 8, **characterized in that** at least one line (10) is arranged on an outer surface of the functional channel (12).

10. Body pillar according to one of Claims 1 to 9, **characterized in that** an airbag (21) is accommodated below the covering (9) in an angular region bounded by the support (4) and an outer surface of the functional channel (12).

11. Body pillar according to Claim 10, **characterized in that** the airbag (21) forms together with the functional channel (12) a preassembly unit.

## Revendications

1. Colonne de carrosserie, notamment colonne A d'un véhicule, comportant un montant rigide, un habillage tourné vers l'habitacle du véhicule ainsi qu'au moins une conduite de liquide ou de courant, **caractérisée en ce qu'**entre le montant (4) et l'habillage (9) est disposé au moins un canal fonctionnel (12), supportant la conduite (10, 11), qui est en liaison de retenue interruptible (18, 19) avec le montant (4) et auquel l'habillage (9) est fixé.

2. Colonne de carrosserie selon la revendication 1, **caractérisée en ce que** le canal fonctionnel (12) constitue avec la conduite (10, 11) une unité prémontée.

3. Colonne de carrosserie selon la revendication 1 ou 2, **caractérisée en ce que** la fixation de l'habillage (9) est constituée par au moins une jonction clippée (16, 17).

4. Colonne de carrosserie selon l'une quelconque des revendications 1 à 3, **caractérisée en ce que** la liaison de retenue est une liaison coulissante avec des creux (19) dans des prolongements (18) en forme de crochets passant dans le montant (4) ou le canal fonctionnel (12) sur le canal fonctionnel (12) ou le montant (4).

5. Colonne de carrosserie selon la revendication 4, **caractérisée en ce que** les prolongements en forme de crochets (18) sont orientés de manière à ce que le mouvement coulissant nécessaire à l'établissement de la liaison de retenue du canal fonctionnel (12) relativement au montant (4) ait lieu du haut vers le bas.

6. Colonne de carrosserie selon la revendication 4 ou 5, **caractérisée en ce qu'**au moins une liaison vissée (20) sert à bloquer la liaison de retenue.

7. Colonne de carrosserie selon l'une quelconque des revendications 4 à 6, **caractérisée en ce que** le canal fonctionnel (12) présente une section transversale ressemblant à un U avec deux branches (13, 14) qui sont pourvues, à leurs extrémités libres, des prolongements en forme de crochets (18), tandis que la base (15) de la section transversale en forme de U est aménagée pour fixer l'habillage (9).

8. Colonne de carrosserie selon l'une quelconque des revendications 1 à 7, **caractérisée en ce qu'**au moins une conduite (11) est intégrée dans le canal fonctionnel (12).

9. Colonne de carrosserie selon l'une quelconque des revendications 1 à 8, **caractérisée en ce qu'**au moins une conduite (10) est disposée sur une surface extérieure du canal fonctionnel (12).

10. Colonne de carrosserie selon l'une quelconque des revendications 1 à 9, **caractérisée en ce qu'**un airbag (21) est logé sous l'habillage (9), dans une zone d'angle délimitée par le montant (4) et une surface extérieure du canal fonctionnel (12).

11. Colonne de carrosserie selon la revendication 10, **caractérisée en ce que** l'airbag (21) constitue avec le canal fonctionnel (12) une unité prémontée.
